# EUROPÄISCHE PATENTANMELDUNG

(11) **EP 1 810 855 A1**
(43) Veröffentlichungstag der Anmeldung: **25.07.2007**
(21) Anmeldenummer: 07000004.7
(22) Anmeldetag: 02.01.2007
(51) Int. Cl.: B60H 1/00, B60H 1/34

(54) **Luftausströmer, insbesondere für ein Belüftungssystem eines Fahrzeugs**

(30) Priorität: 18.01.2006 DE 102006002590
(71) Anmelder: Behr GmbH & Co. KG, 70469 Stuttgart (DE)
(72) Erfinder: Klingler, Dipl. Ing. Dietrich, 73540 Heubach (DE)

(57) **Zusammenfassung**

Die Erfindung betrifft einen Luftausströmer (5a oder 5b), insbesondere für ein Belüftungssystem (B) eines Fahrzeugs, mit mindestens einem Luft (L) zuführenden Strömungskanal (1, 1a, 1 b), dessen Ausströmrichtung (R) einstellbar ist und der strömungsausgangsseitig mindestens einen flexiblen Kanalabschnitt (1.1, 1a.1, 1b.1) aufweist.

## Beschreibung

Die Erfindung betrifft einen Luftausströmer, insbesondere für ein Belüftungssystem eines Fahrzeugs.

Um im Fahrzeuginnenraum schnell eine angenehme Temperierung zu schaffen, muss genügend temperierte Luft und aus Komfortgründen möglichst ohne Geräusch in den Fahrzeuginnenraum befördert werden. Bei Belüftungsvorrichtungen für Fahrzeuge werden im Allgemeinen Luftausströmer oder Luftausiassdüsen eingesetzt, die eine gezielte Steuerung des austretenden Luftstrahls ermöglichen. Dabei ist man bestrebt, sowohl einen gerichteten Luftstrahl als auch eine Strahlaufspreizung zu erzielen. Durch eine Strahlaufspreizung lässt sich gegenüber einem fokussierten Luftstrahl eine energetisch effizientere Temperierung erzielen. Beim fokussierten und temperierten Luftstrahl wird eine schnelle Temperierung erzielt Derartige sowohl einen fokussierten als auch einen diffusen Luftstrahl ermöglichende Düsen werden auch Komfortdüsen genannt und weisen im Allgemeinen einen kleinen Bauraum auf.

Aus der WO2005/021301 ist ein Luftausströmer mit mindestens einem Luft zuführenden Strömungskanal bekannt, wobei die Ausströmrichtung der Düse einstellbar ist, indem in der Düse der Strömungskanal in mindestens zwei Teil-Strömungskanäle aufgeteilt ist, wovon mindestens ein Teil-Strömungskanal in seiner Ausströmrichtung einstellbar ist und mindestens ein Teil-Strömungskanal starr ausgebildet ist. Dabei weist der einstellbare Teil-Strömungskanal bewegliche und starre Kanalabschnitte auf. Bei dem bekannten Luftausströmer entstehen beim Verdrehen des beweglichen Zylinders oder Kanalabschnitts zum starren Zylinder große Luftspalte, welche Geräusche verursachen.

Darüber hinaus kann es bei derartigen herkömmlichen Luftausströmern beim Verstellen der Kanalabschnitte oder vorgesehener Luftleitelemente zur ungewollten Beeinflussungen der Luftführung kommen. So kann es z. B. bei der Verstellung der Luftleitelemente zu Rückströmungen kommen, welche die Ablenkung und somit den Ablenkwinkel nachteilig beeinflussen. Der Einsatz zusätzlicher Luftleitelemente führt darüber hinaus zu größerem Bauraum und zu höheren Kosten.

Der Erfindung liegt daher die Aufgabe zugrunde, einen Luftausströmer mit einer möglichst kompakten Bauweise anzugeben, der eine möglichst geringe Geräuschentwicklung bei möglichst guter Luftstrahlablenkung oder Luftstrahlaufspreizung erzielt. Darüber hinaus ist ein besonders einfach ausgebildetes Belüftungssystem anzugeben.

Die Aufgabe wird erfindungsgemäß durch die Merkmale des Anspruchs 1 gelöst. Hinsichtlich des Belüftungssystems wird die Aufgabe erfindungsgemäß durch die Merkmale des Anspruchs 15 gelöst.

Vorteilhafte Weiterbildungen sind Gegenstand der Unteransprüche.

Der Luftausströmer umfasst dabei als Düse mindestens einen Luft zuführenden Strömungskanal, dessen Ausströmrichtung einstellbar ist und der strömungsausgangsseitig mindestens einen flexiblen Kanalabschnitt aufweist. Durch einen flexiblen, insbesondere biegsamen Kanalabschnitt ist der Strömungskanal im einstellbaren Bereich geschlossen ausgebildet Durch eine geschlossene Kanalausbildung des biegsamen Kanalabschnitts ist eine Geräuschentwicklung durch aus dem Stand der Technik bekannte Kanalöffnungen vermieden. Darüber hinaus entfallen durch den flexiblen Kanalabschnitt zusätzliche Bauteile. Somit ist ein derartig ausgebildeter Luftausströmer besonders raum- und platzsparend sowie kostensparend.

In einer möglichen Ausführungsform ist der flexible Kanalabschnitt zusammenpressbar, zusammenschiebbar, drehbar und/oder schwenkbar. Dies ermöglicht ohne zusätzliche Bauteile eine einfache Umlenkung der im Strömungskanal strömenden Luft.

Vorzugsweise bildet der flexible Kanalabschnitt ein Biegegelenk. Hierdurch ist in besonders einfacher Art und Weise eine horizontale oder vertikale Ablenkung der ausströmenden Luft ermöglicht. Alternativ oder zusätzlich können für eine weitere vertikale oder horizontale Ablenkung vertikale bzw. horizontale Lamellen vorgesehen sein. Beispielsweise können die Lamellen im Auslassbereich vor dem Ausgang des Strömungskanals angeordnet sein.

In einer weiteren Ausführungsform ist der flexible Kanalabschnitt ziehharmonikaförmig ausgebildet. Dabei weist die Ziehharmonikaform (auch blase- oder faltenbalgartige Form genannt) einen im Wesentlichen gleich bleibenden Innen- und Außenradius für die einzelnen Falten auf. Dies ermöglicht eine hinreichend gute Umlenkung des Luftstrahls bei einer weitgehend gleichmäßigen, verwirbelungsfreien Strömung. Alternativ kann zur Einstellung von strömungsausgangsseitig höheren oder geringeren Strömungsgeschwindigkeiten der Kanalabschnitt in Längsrichtung gesehen einen zu- bzw. abnehmenden Querschnitt aufweisen.

Zweckmäßigerweise ist der flexible Kanalabschnitt zwischen zwei starren Kanalabschnitten oder einem einstellbaren Kanalabschnitt und einem starren Kanalabschnitt des Strömungskanals angeordnet. Dabei ist mittels des beweglichen, insbesondere biegsamen Kanalabschnitts zwischen zwei starren oder einem starren und einem einstellbaren Kanalabschnitt in besonders einfacher Art und Weise eine Umlenkung - horizontal oder vertikal - ermöglicht.

Zur Vermeidung einer seitlichen Luftausströmung und somit zur Verhinderung von Geräuschentwicklungen infolge von seitlichen Luftausströmungen durch ungewollte Öffnungen ist der flexible Kanalabschnitt mit einem benachbarten Kanalabschnitt form-, stoff- und/oder kraftschlüssig verbindbar. Vorzugsweise sind benachbarte Kanalabschnitte ineinander gesteckt, miteinander verklebt und/oder miteinander verklipst. Alternativ können benachbarte Kanalabschnitte mittels eines Bajonettverschlusses miteinander verbunden sein.

In einer möglichen Ausführungsform ist der flexible Kanalabschnitt aus einem thermoplastischen Elastomer gebildet. Ein derartiger aus einem thermoplastischen Elastomer gebildeter Kanalabschnitt ist besonders wärmeformbeständig, reiß- und schlagfest und weist eine hohe Biegsamkeit auf. Mit anderen Worten: Der flexible Kanalabschnitt ist aus einem Material zwischen Kunststoff und Gummi gebildet. Alternativ kann der flexible Kanalabschnitt aus einem amorphen Thermoplast, insbesondere aus Polycarbonat-Acrylnitril-Butadien-Styrol (kurz PCIABS genannt) oder Acrylnitril-Butadien-Styrol (kurz ABS genannt) gebildet sein. In einer weiteren alternativen Ausführungsform kann der flexible Kanalabschnitt aus einem teilkristallinen Thermoplast, insbesondere aus Polypropylen (kurz PP genannt) talkumverstärkt mit Polypropylen-Ethylen-Propylen-Terpolymer (kurz PP/EPDM genannt) gebildet sein.

Vorzugsweise herrscht in dem Strömungskanal eine gerichtete Strömung vor. Um verschiedene Luftführungsfunktionen zu ermöglichen, kann der Strömungskanal zusätzlich von einem weiteren Strömungskanal umgeben sein. Dabei weist der innere Strömungskanal im Wesentlichen einen kreisförmigen Querschnitt auf und dient der gerichteten Luftströmung, wie sie beispielsweise in der Spotstellung des Luftausströmers gewünscht ist. Demgegenüber dient der weitere Strömungskanal als ein äußerer Strömungskanal, wobei die im äußeren Strömungskanal geführte Luftströmung mit einem Drall versehen ist. Beispielsweise ist die äußere Luftströmung insbesondere schraubenartig um den inneren Strömungskanal geführt. Durch die Drallbeaufschlagung ergibt sich am Luftaustritt eine diffuse Luftströmung, wie sie beispielsweise in einer Komfortstellung des Luftausströmers erwünscht ist.

Bevorzugt umfasst ein Belüftungssystem mindestens einen Luftausströmer in Art einer Einfachdüse mit verschiedenen Belüftungsfunktionen von Komfort- bis zur Spotstellung und mit beliebigen Ausrichtungen des gerichteten Luftstrahls und gegebenenfalls mit einer in der Strömungsstärke einstellbaren diffusen Austrittsströmung. Alternativ kann der Luftausströmer auch mehrteilig ausgebildet sein. Beispielsweise kann der Luftausströmer als eine Doppeldüse zwei nebeneinander angeordnete, im Wesentlichen gleichartig ausgebildete Luftausströmer umfassen. Dabei sind deren flexible Kanalabschnitte parallel zueinander schwenkbar angeordnet. Hierzu sind die zwei nebeneinander angeordneten Luftausströmer über ein Koppelgelenk miteinander verbunden. In einer weiteren Variante können diese zwei oder auch mehrere nebeneinander angeordneten Luftausströmer über jeweils ein zum jeweiligen Luftausströmer führendes Koppelgestänge unabhängig oder getrennt voneinander ansteuerbar sein.

Ausführungsbeispiele der Erfindung werden anhand einer Zeichnung näher erläutert. Darin zeigen:
- Fig. 1: schematisch als Teil eines Luftausströmers einen Luft zuführenden Strömungskanal im Längsschnitt,
- Fig. 2: schematisch zwei nebeneinander angeordnete Strömungskanäle gemäß Figur 1 für als Doppeldüse ausgebildete Luftausströmer in perspektivischer Darstellung,
- Fig. 3: schematisch als Doppeldüse ausgebildete Luftausströmer mit integrierten Strömungskanälen gemäß Figur 2 im eingebauten Zustand in perspektivischer Darstellung,
- Fig. 4: schematisch die Luftausströmer gemäß Figur 3 im eingebauten Zustand im Längsschnitt,
- Fig. 5: schematisch den Strömungskanal gemäß Figur 1 im Bereich zwischen benachbarten Kanalabschnitten im Querschnitt,
- Fig. 6 bis 8: schematisch verschiedene Ausführungsformen für Verbindungen von benachbarten Kanalabschnitten des Strömungskanals gemäß Figur 1.

Einander entsprechende Teile sind in allen Figuren mit den gleichen Bezugszeichen versehen.

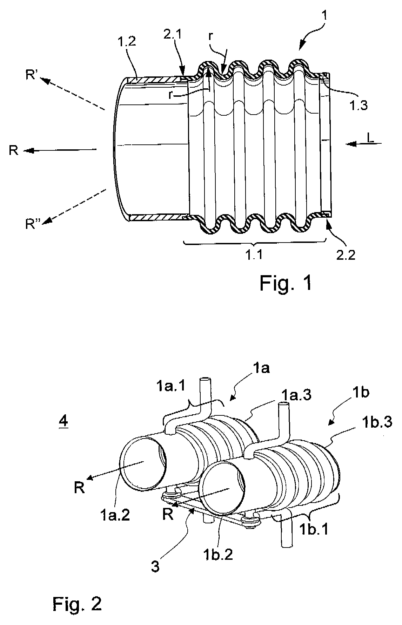

Figur 1 zeigt einen Luft L zuführenden Strömungskanal 1, dessen Ausströmrichtung R einstellbar ist. Hierzu umfasst der Strömungskanal 1 einen flexiblen, insbesondere biegsamen Kanalabschnitt 1.1. Der flexible Kanalabschnitt 1.1 ist strömungsausgangsseitig im Luftaustrittsbereich des Strömungskanals 1 angeordnet. Der flexible Kanalabschnitt 1.1 dient der einfachen Umlenkung der im Strömungskanal 1 geführten Luft L, wobei beim Umlenken der Luft L der Strömungskanal 1 geschlossen ist.

Für eine einfache und geschlossene Umlenkung der Luft L ist der flexible Kanalabschnitt 1.1 selbst zusammenpressbar, zusammenschiebbar, drehbar und/oder schwenkbar ausgebildet. Für eine horizontale oder vertikale Umlenkung der Luft L wird der flexible Kanalabschnitt 1.1 in horizontaler Richtung bzw. in vertikaler Richtung zur Seite bzw. nach oben oder unten geschwenkt. Dabei bildet der flexible Kanalabschnitt 1.1 ein Biegegelenk. Hierzu ist der flexible Kanalabschnitt 1.1 ziehharmonikaförmig ausgebildet. Mit anderen Worten: Der flexible Kanalabschnitt 1.1 ist zur Bildung eines Biegegelenks blase- oder faltenbalgartig ausgeführt.

Für eine raum- und platzsparende Ausbildung des flexiblen Kanalabschnitts 1-1 bei gleichzeitig homogener Führung und einfacher Umlenkung der Luft L im flexiblen Kanalabschnitt 1.1 weist dieser einen annähernd kreisförmigen Querschnitt auf. Hierzu sind die mittleren Innen- und Außenradien r der Ziehharmonika annähernd gleich groß. Somit weist der flexible Kanalabschnitt 1.1 einen möglichst gleichmäßigen Querschnitt auf, so dass die durch diesen geschlossenen Kanalabschnitt 1.1 geführte Luft L relativ gleichmäßig und verwirbelungsfrei geführt und je nach Biegungsgrad des Kanalabschnitts 1.1 umgelenkt wird. Dies führt zu einer Reduzierung der Geräuschentwicklung gegenüber herkömmlichen Strömungskanälen.

Zur Erzielung der beschriebenen, bereichsweisen Biegsamkeit des Strömungskanals 1 ist der flexible Kanalabschnitt 1.1 aus einem thermoplastischen Elastomer (kurz TPE genannt) gebildet. In einer weiteren Ausführungsform kann der flexible Kanalabschnitt 1.1 aus einem amorphen Thermoplast, insbesondere aus Polycarbonat-Acrylnitril-Butadien-Styrol oder Acrylnitril-Butadien-Styrol oder Polycarbonat-Acrylnitril-Butadien-Styrol mit einem thermoplastischen Elastomer gebildet sein. Darüber hinaus kann der flexible Kanalabschnitt 1.1 aus einem teilkristallinen Thermoplast, insbesondere aus Polypropylen talkumverstärkt mit Polypropylen-Ethylen-Propylen-Terpolymer gebildet sein. Derartige Materialien ermöglichen eine hohe Wärmeformbeständigkeit des flexiblen Kanalabschnitts 1.1, in welchem insbesondere temperierte Luft L geführt wird.

Der flexible Kanalabschnitt 1.1 ist je nach vorgegebener Luftführungsfunktion beispielsweise zwischen zwei starren Kanalabschnitten 1.2 und 1.3 angeordnet. Die benachbarten Kanalabschnitten 1.2 und 1.1 bzw. 1.1 und 1.3 sind an deren Übergängen 2.1 bzw. 2.2 vorzugsweise form-, kraft- und/oder stoffschlüssig verbunden.

Auch kann der flexible Kanalabschnitt 1.1 zwischen einem einstellbaren Kanalabschnitt 1a.2 (oder 1b.2) und einem starren Kanalabschnitt 1a.3 (oder 1b.3) des Strömungskanals 1 angeordnet sein, wie das in Figur 2 für einen Doppelkanal 4 gezeigt ist. Figur 2 zeigt einen Doppelkanal 4, der zwei nebeneinander angeordnete Strömungskanäle 1a und 1b aufweist. Zur Einstellung der Ausströmrichtung R des jeweiligen Strömungskanals 1a und 1b ist ein strömungsausgangsseitig vorgesehener Kanalabschnitt 1a.2 bzw. 1b.2 einstellbar. Hierzu sind die betreffenden Kanalabschnitte 1a.2 und 1b.2 über ein Koppelgelenk 3 miteinander verbunden.

Durch Steuerung des Koppelgelenks 3 werden die flexiblen Kanalabschnitte 1a.1 und 1b.1 entsprechend gebogen. Beispielsweise kann die in den Strömungskanälen 1 a und 1b geführte Luft L horizontal oder vertikal umgelenkt werden. Je nach Ausführung des Koppelgelenks 3 können die Ausströmrichtungen R, R', R" der beiden Strömungskanäle 1 a und 1b synchron oder separat verstellt werden. Hierzu sind eine gemeinsame oder mehrere getrennte, nicht näher dargestellte Verstelleinrichtungen vorgesehen, welche entsprechend gesteuert werden.

Je nach Querschnitt des Strömungskanals 1, 1 a und 1b sind verschiedene Luftführungsfunktionen möglich. Bei dem dargestellten kreisförmigen Querschnitt ist ein gerichteter oder spotförmiger Luftaustritt einstellbar, der in die gewünschte Ausströmrichtung R gelenkt wird. Alternativ oder zusätzlich können in den Strömungskanälen 1, 1a und 1b nicht näher dargestellte Luftleitelemente angeordnet sein, welche eine gewünschte Luftaustrittsform, beispielsweise einen diffusen Luftaustritt ermöglichen.

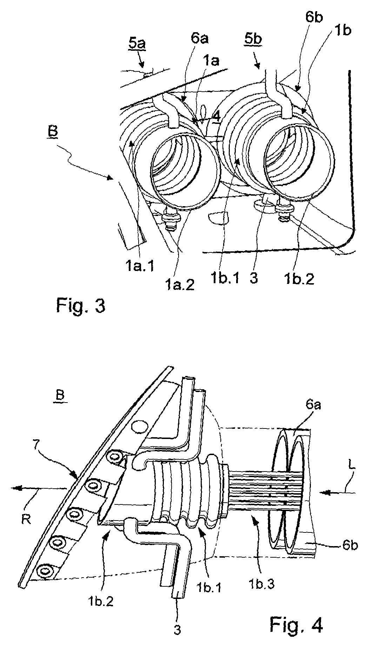

Figur 3 zeigt ein Belüftungssystem B, insbesondere für ein Fahrzeug, mit zwei Luftausströmern 5a und 5b, die eine Doppeldüse bilden. Die Luftausströmer 5a und 5b umfassen jeweils einen zugehörigen Strömungskanal 1a bzw. 1b, der mehrere zugehörige Kanalabschnitte 1a.1 bis 1 a.3 bzw. 1b.1 bis 1b.3 umfasst. Die Strömungskanäle 1 a und 1b sind kreisförmig ausgeführt und dienen einer gerichteten Strömung am Luftaustritt des jeweiligen Luftausströmers 5a bzw. 5b.

Zur Erzielung verschiedener Luftführungsfunktionen umfassen die Luftausströmer 5a und 5b jeweils einen weiteren Strömungskanal 6a bzw. 6b, die den kreisförmigen und inneren Strömungskanal 1 a bzw. 1 b umgeben. Die äußeren Strömungskanäle 6a und 6b können ebenfalls, kreisförmig ausgebildet sein. Sie können aber auch eine beliebige andere Querschnittsform, z. B. viereckig, aufweisen. In den äußeren Strömungskanälen 6a und 6b herrscht eine drallbeaufschlagte Strömung vor. Hierzu ist die Luft L in den äußeren Strömungskanälen 6a und 6b wendel- oder spiralförmig geführt. Dabei können in nicht näher dargestellter Art und Weise entsprechende Luftleitelemente in den äußeren Strömungskanälen 6a und 6b angeordnet sein. Alternativ können die äußeren Strömungskanäle 6a und 6b entsprechend um die inneren Strömungskanäle 1a bzw. 1b geschraubt oder gewunden sein.

Die äußeren Strömungskanäle 6a und 6b sind starr ausgebildet, d.h. die aus den Strömungskanälen 6a und 6b austretende diffuse Luftströmung wird nicht abgelenkt. Die aus den inneren Strömungskanälen 1 a und 1b austretende spotförmige oder gerichtete Luftströmung kann je nach Richtungseinstellung des Koppelgelenks 3 die Luft L nach oben, unten, rechts oder links sowie in eine beliebige Zwischenrichtung ablenken.

Mit anderen Worten: Das in der Figur 3 dargestellte Belüftungssystem B mit einer aus zwei Luftausströmern 5a und 5b gebildeten Doppeldüse ermöglicht sowohl einen gerichteten Luftaustritt als auch einen diffusen Luftaustritt und jede beliebige Zwischeneinstellung.

Je nach Luftführungsfunktion und Einbauort des Luftausströmers 5a bzw. 5b im Belüftungssystem B kann ein einzelner Luftausströmer 5a oder 5b in Art einer Einfachdüse oder können mehrere Luftausströmer 5a und 5b in Art von Mehrfachdüsen vorgesehen sein. Beispielsweise sind für eine Temperierung des Fahrzeuginnenraums mittig im Cockpit eine oder mehrere Doppeldüsen und seitlich eine oder mehrere Einfachdüsen angeordnet_

Figur 4 zeigt die eingebaute Doppeldüse gemäß Figur 3 im Längsschnitt. Zusätzlich zur Ablenkung der Luft L in den Strömungskanälen 1a und 1b können am Luftaustritt des Luftausströmers 5a bzw. 5b lamellenförmige Luftleitelemente 7 für eine vertikale oder horizontale Ablenkung angeordnet sein. Die Luftleitelemente 7 können einstellbar oder starr ausgebildet sein. Beispielsweise können starre oder schwenkbare Horizontal- oder Vertikallamellen vorgesehen sein.

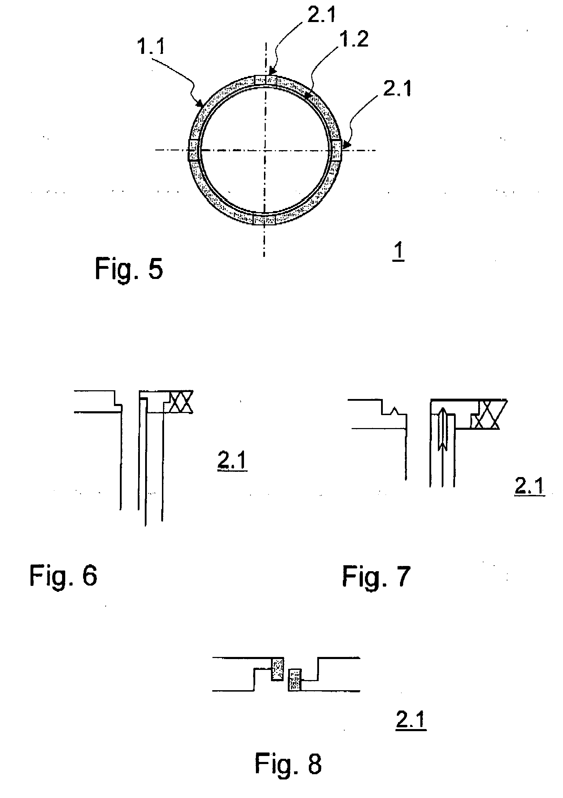

Die Figuren 5 bis 8 zeigen verschiedene Ausführungsformen für den inneren Strömungskanal 1, 1a oder 1b. In Figur 5 ist der kreisförmige Querschnitt im Bereich eines Übergangs 2.1 oder 2.2 zwischen benachbarten Kanalabschnitten 1-2 und 1.1 gezeigt.

Vorzugsweise sind die benachbarten Kanalabschnitte 1.2 und 1.1 formschlüssig miteinander verbunden. Hierzu sind sie beispielsweise ineinander gesteckt, siehe Figur 6. Zusätzlich können sie stoffschlüssig, z. B. miteinander verklebt sein. Figur 7 zeigt eine Klipsverbindung. Figur 8 zeigt eine Bajonettverbindung.

## Patentansprüche

1. Luftausströmer (5a, 5b), insbesondere für ein Belüftungssystem (B) eines Fahrzeugs, mit mindestens einem Luft (L) zuführenden Strömungskanal (1, 1a, 1b), dessen Ausströmrichtung (R) einstellbar ist und der strömungsausgangsseitig mindestens einen flexiblen Kanalabschnitt (1.1, 1a.1, 1b.1) aufweist.

2. Luftausströmer nach Anspruch 1, wobei der flexible Kanalabschnitt (1.1, 1a.1, 1b.1) zusammenpressbar, zusammenschiebbar, drehbar und/oder schwenkbar ist.

3. Luftausströmer nach Anspruch 1 oder 2, wobei der flexible Kanalabschnitt (1.1, 1a.1, 1b.1) ein Biegegelenk bildet.

4. Luftausströmer nach einem der Ansprüche 1 bis 3, wobei der flexible Kanalabschnitt (1.1, 1a.1, 1b.1) ziehharmonikaförmig ausgebildet ist.

5. Luftausströmer nach einem der Ansprüche 1 bis 4, wobei der flexible Kanalabschnitt (1.1, 1a.1, 1b.1) zwischen zwei starren Kanalabschnitten (1.2, 1.3) oder einem einstellbaren Kanalabschnitt (1a.2, 1b.2) und einem starren Kanalabschnitt (1a.3, 1b.3) des Strömungskanals (1a, 1b) angeordnet ist.

6. Luftausströmer nach einem der Ansprüche 1 bis 5, wobei der flexible Kanalabschnitt (1.1, 1a.1, 1b.1) mit einem benachbarten Kanalabschnitt (1.2, 1.3 oder 1a.2, 1a.3 oder 1b.2, 1b.3) form-, stoff- und/und kraftschlüssig verbindbar ist.

7. Luftausströmer nach Anspruch 6, wobei benachbarte Kanalabschnitte (1.1, 1-2, 1-3 oder 1a-1, 1a.2, 1a.3 oder 1b.1, 1b.2, 1b.3) ineinander gesteckt, miteinander verklebt und/oder verklipst sind.

8. Luftausströmer nach einem der Ansprüche 1 bis 7, wobei der flexible Kanalabschnitt (1.1, 1a.1, 1b.1) aus einem thermoplastischen Elastomer gebildet ist.

9. Luftausströmer nach einem der Ansprüche 1 bis 8, wobei der flexible Kanalabschnitt (1.1, 1a.1, 1b.1) aus einem amorphen Thermoplast, insbesondere aus Polycarbonat-Acrylnitril-Butadien-Styrol oder Acryinitril-Butadien-Styrol gebildet ist.

10. Luftausströmer nach einem der Ansprüche 1 bis 9, wobei der flexible Kanalabschnitt (1.1, 1a.1, 1b.1) aus einem teilkristallinen Thermoplast, insbesondere aus Polypropylen talkumverstärkt mit Polypropylen-Ethylen-Propylen-Terpolymer gebildet ist.

11. Luftausströmer nach einem der Ansprüche 1 bis 10, wobei in dem Strömungskanal (1.1, 1a.1, 1b.1) eine gerichtete Strömung vorherrscht.

12. Luftausströmer nach einem der Ansprüche 1 bis 11, wobei der Strömungskanal (1.1, 1a.1, 1b.1) im Wesentlichen einen kreisförmigen Querschnitt aufweist.

13. Luftausströmer nach einem der Ansprüche 1 bis 12, wobei der Strömungskanal (1a, 1b) von einem weiteren Strömungskanal (6a, 6b) umgeben ist.

14. Luftausströmer nach Anspruch 13, wobei in dem weiteren Strömungskanal (6a, 6b) eine drallbeaufschlagte Strömung vorherrscht.

15. Belüftungssystem (B), insbesondere für ein Fahrzeug, **gekennzeichnet durch** mindestens einen Luftausströmer (5a, 5b) nach einem der Ansprüche 1 bis 14.

16. Belüftungssystem nach Anspruch 15, umfassend zwei nebeneinander angeordnete Luftausströmer (5a, 5b), die über ein Koppelgelenk (3) miteinander verbunden sind.

17. Belüftungssystem nach Anspruch 16, umfassend zwei nebeneinander angeordnete Luftausströmer (5a, 5b), die über jeweils ein zum jeweiligen Luftausströmer (5a, 5b) führendes Koppelgestänge, getrennt voneinander ansteuerbar sind.
